# EUROPEAN PATENT APPLICATION

(11) **EP 4 845 131 A1**
(43) Date of publication of application: **25.11.2026**
(21) Application number: 26178276.7
(22) Date of filing: 12.05.2026
(51) Int. Cl.: H04L 69/22, H04L 69/16, H04L 9/32, H04L 9/40, H04L 69/163

(54) **EXTENDED TRANSMISSION CONTROL PROTOCOL OPTIONS FIELDS**

(30) Priority: 22.05.2025 US 202563810250 P; 16.04.2026 US 202619649982
(71) Applicant: Juniper Networks, Inc., Sunnyvale, CA 94089-1206 (US)
(72) Inventor: BONICA, Ronald, Sunnyvale, 94089 (US); LI, Anthony Joseph, Sunnyvale, 94089 (US)
(74) Representative: Marks & Clerk LLP

(57) **Abstract**

In some implementations, a first network device may receive a transmission control protocol (TCP) segment including a TCP header having a data offset field and a TCP options field. The first network device may determine that the data offset field is set to a value that indicates that a length of the TCP options field is provided by a length field included in the TCP options field. The first network device may determine the length of the TCP options field using the length field included in the TCP options field. The first network device may identify contents of the TCP options field based on the length of the TCP options field.

## Description

### CROSS-REFERENCE TO RELATED APPLICATION

This Patent Application claims priority to U.S. Provisional Patent Application No. 63/810,250, filed on May 22, 2025, and also U.S. Patent Application No. 19/649,982 filed on April 16, 2026, entitled "TRANSMISSION CONTROL PROTOCOL EXTENDED OPTIONS." The disclosure of each of these Applications is considered part of and is incorporated by reference into this Patent Application.

### BACKGROUND

A transmission control protocol (TCP) segment includes a TCP header and application data (also called the payload). The TCP segment may be encapsulated in an Internet protocol (IP) packet for transmission (e.g., as defined by International Engineering Task Force (IETF) Request for Comment (RFC) 9293).

### SUMMARY

Particular aspects are set out in the appended independent claims. Various optional embodiments are set out in the dependent claims.

### BRIEF DESCRIPTION OF THE DRAWINGS

Figs. 1A-1H are diagrams of an example implementation associated with extended TCP options fields.
Figs. 2A-2B are diagrams of an example associated with components used to implement extended TCP options fields.
Fig. 3 is a flowchart of an example process associated with extended TCP options fields.
Fig. 4 is a flowchart of an example process associated with extended TCP options fields.

### DETAILED DESCRIPTION

The following detailed description of example implementations refers to the accompanying drawings. The same reference numbers in different drawings may identify the same or similar elements.

A TCP header includes various fields, such as a source port field, a destination port field, a sequence number field, an acknowledgment number field, a data offset field, a field including a set of flags or control bits, a window field, a checksum field, an urgent pointer field, and a TCP options field. Fields in the TCP header, except for the TCP options field, have a fixed length, and collectively the fixed-length fields in the TCP header occupy 20 octets. The last field in the TCP header is the TCP options field, which, when present, contains a list of TCP options. The TCP options field is a variable length field that contains at most 40 bytes (e.g., a length of the TCP options field varies from 0 to 40 octets).

More particularly, the data offset field (which has a fixed length of four bits) represents the offset of the data field (e.g., the field following the TCP options field) in the TCP segment, measured in four-octet units. The data offset field thus also determines the length of the TCP options field. This is because the TCP options field consumes the space between the fixed-length fields in the TCP header and the data field. Moreover, because the data offset field contains four bits, the data offset field has a value ranging nominally from 0 to 15. For example, the data offset field may be used to indicate a four-bit unsigned integer whose value ranges from 0000₂ (0) to 1111₂ (15). However, currently the value of the data offset field is set to 5 or greater (corresponding to 5 × 4-octet units, or 20 octets) because the data field follows at least the fixed-length fields in the TCP header, which occupy 20 octets. Put another way, the minimum data offset is 20 octets, and thus the minimum value to be used for the data offset field is 5. Moreover, because the value of the data offset cannot exceed 15 (e.g., due to the fixed four-bit size of the data offset field), the offset of the data field can be no more than 60 octets (corresponding to 15 × 4-octet units = 60 octets). Accordingly, the length of the TCP options field, which occupies the space between the 20-octet fixed-length fields in the TCP header and the data field, can be at most 40 octets (bytes) (e.g., 60-octet maximum data offset - 20-octet fixed-length fields = 40 octets).

However, some TCP options to be included in the TCP header may exceed 40 bytes. For example, a TCP authentication option (TCP-AO) is a security extension to TCP that provides cryptographic authentication of TCP segments. TCP-AO supports multiple authentication algorithms that generate message digests that are encoded in the TCP-AO option. Although older authentication algorithms generate short message digests capable of fitting within 40 octets, newer authentication algorithms generate longer message digests that may be greater than 40 bytes. In some cases, when longer message digests are encoded in the TCP-AO option, the TCP-AO option becomes so large that it does not fit into the TCP options field (e.g., the message digest is greater than the maximum TCP options field length of 40 bytes), and therefore TCP-AO cannot be fully supported. This results in decreased security, increased communication errors, and/or high resource consumption associated with remedying security breaches or correcting communication errors.

Some techniques and implementations described herein enable expansion of the TCP options field beyond 40 bytes. For example, some implementations expand a maximum length of the TCP options field to 1024 bytes. In some implementations, the TCP options field is extended to include a length field (or subfield) that represents a length of the TCP options field, including the length field and a reserved field, measured in 4-octet units. In some implementations, the length field is 8 bits and may therefore indicate a length of the TCP options field from 0 to 1024 bytes (e.g., in 4-byte increments). To alert a receiving device that the extended TCP options field is being used, some implementations described herein include setting a data offset field of the TCP header of the TCP segment to a specific value (e.g., "0") to indicate that the length of the TCP options field is indicated by the length field of the TCP options field. Accordingly, the data offset field may be set to the value when a total length of the TCP options field is greater than 40 bytes. When the total length of the TCP options field is less than or equal to 40 bytes, the data offset field may be set to indicate a length of the TCP options field as defined in IETF RFC 9293 (e.g., to have a value from 5 to 15).

As a result, a maximum length of the TCP options field may be expanded beyond 40 octets, thereby enabling use of modern applications requiring more than 40 bytes of TCP options, such as TCP-AO, among other examples. In this way, the techniques and implementations described herein may increase security for TCP-based communications, thereby reducing computing, power, and network resource consumption otherwise associated with identifying and remedying security breaches. Additionally, or alternatively, by enabling longer TCP options and thus increased information exchange between TCP endpoints, the techniques and implementations described herein may reduce communication errors, thereby reducing computing, power, and network resource consumption otherwise associated with identifying and correcting communication errors.

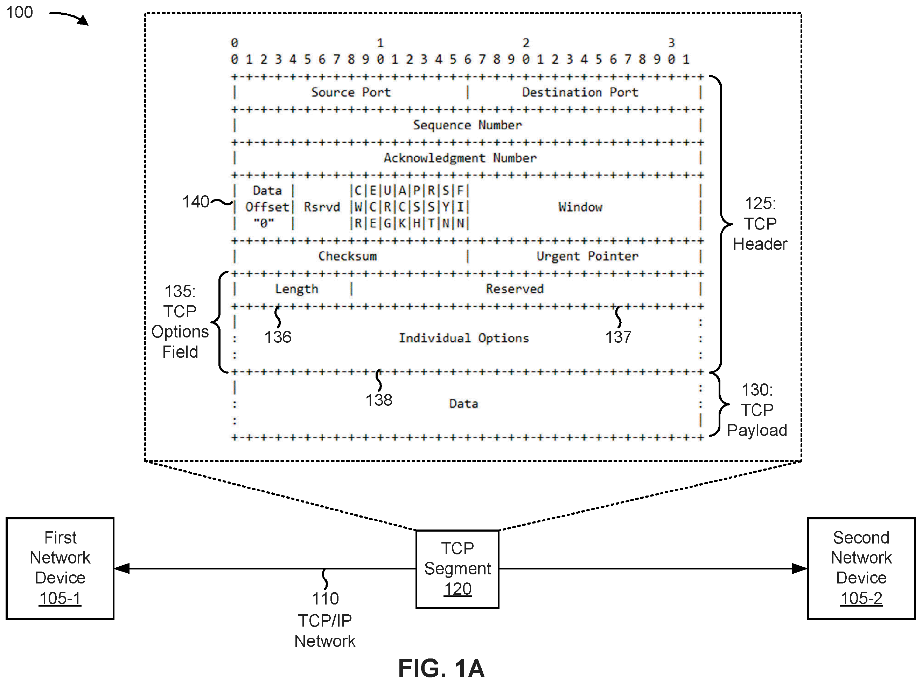

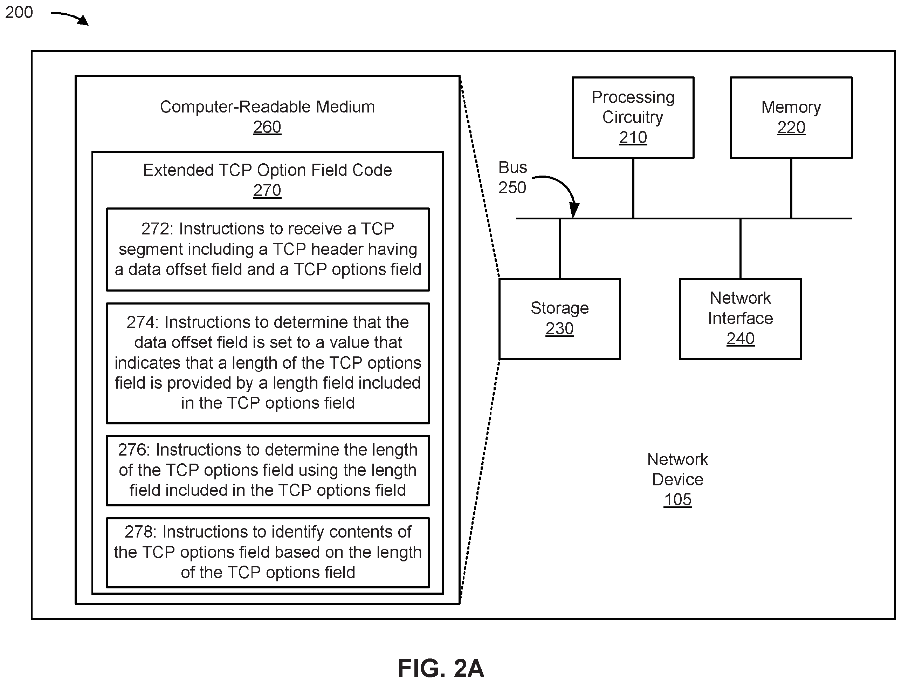

Figs. 1A-1H are diagrams of an example implementation 100 associated with extended TCP options fields. As shown in Figs. 1A-1H, example implementation 100 includes network devices 105 (shown in Figs. 1A-1H as a first network device 105-1 and a second network device 105-2) communicating via a TCP/IP network 110. The network devices 105 are described in more detail below in connection with Figs. 2A-2B.

The TCP/IP network 110 is a network in which network devices 105 communicate using the TCP as the protocol for data transmission (e.g., that uses TCP at the transport layer of the TCP/IP network 110). In that regard, the network devices 105 may communicate via the TCP/IP network 110 by exchanging TCP segments 120 encapsulated in IP packets. As described above, and as shown in Figs. 1A-1H, the TCP segment includes a TCP header 125 and a TCP payload 130 (sometimes referred to herein as "payload," "application data," or simply "data").

As further shown in Figs. 1A-1H, the TCP segment 120 may include a TCP options field 135. To accommodate modern applications and/or lengthy TCP options, the TCP options field 135 may be a variable length field having a length field 136 (sometimes referred to herein as a "length subfield") therein indicating the length of the TCP options field 135. Put another way, rather than using a data offset field 140 to indicate a length of the TCP options field 135, the TCP segment 120 includes a separate length field 136 in the TCP options field 135 that indicates the length of TCP options field 135, such as by indicating a quantity of four-octet units included in the TCP options field 135. For example, in some implementations, the length field 136 may be an eight-bit field (e.g., may be used to indicate an eight-bit unsigned integer representing the length of the TCP options field 135, including the length field 136 and the reserved field 137), which is thus capable of indicating a nominal value between 0 and 255. In such examples, the length field 136 may be capable of indicating a length of the TCP options field 135 up to a maximum length of 1020 bytes or octets (e.g., 255× 4-octet units = 1020 octets).

As further shown in Figs. 1A-1H, the TCP options field may include one or more additional fields, such as a reserved field 137 (sometimes referred to herein as a "reserved subfield") and an individual options field 138 (sometimes referred to herein as an "individual options subfield"). In some implementations, the reserved field 137 may be 24 bits, and/or the reserved field 137 may be set to 0 by the sender and ignored by the receiver. Additionally, or alternatively, the individual options field 138 may be used to indicate one or more of the options defined in IETF RFC 9293 (e.g., an end of option list option, a no-operation option, a maximum segment size (MSS) option, a TCP selective acknowledgement (SACK) option, a TCP timestamp (TS) option, a TCP window scale (WS) option, a TCP-AO option, or a similar option). Moreover, a length of the individual options field 138 may be equal to a length of the TCP options field 135 (as indicated by the length field 136) minus 32 bits (corresponding to the sum of the 8 bits occupied by the length field and the 24 reserved bits).

In some implementations, the data offset field 140 may be set to a specific value to indicate that the TCP options field 135 shown in Figs. 1A-1H (e.g., an extended TCP options field 135 that includes the length field 136) is present in the TCP segment 120. For example, when TCP options to be included in TCP segment 120 are 40 octets or less, the TCP options field defined by IETF RFC 9293 may be employed, and the data offset field 140 may be set to a value between 5 and 15 to indicate the length of the TCP options field. However, when TCP options to be included in TCP segment 120 are longer than 40 octets, such as implementations associated with lengthy message digests for TCP-AO, the extended TCP options field 135 shown in Figs. 1A-1H may be employed. In such implementations, the data offset field 140 may be set to a specific value to indicate that the TCP options field 135 is included in the TCP segment 120. For example, as shown in Figs. 1A-1H, the data offset field 140 may be set to 0 to indicate that the TCP options field 135 is included in the TCP segment 120.

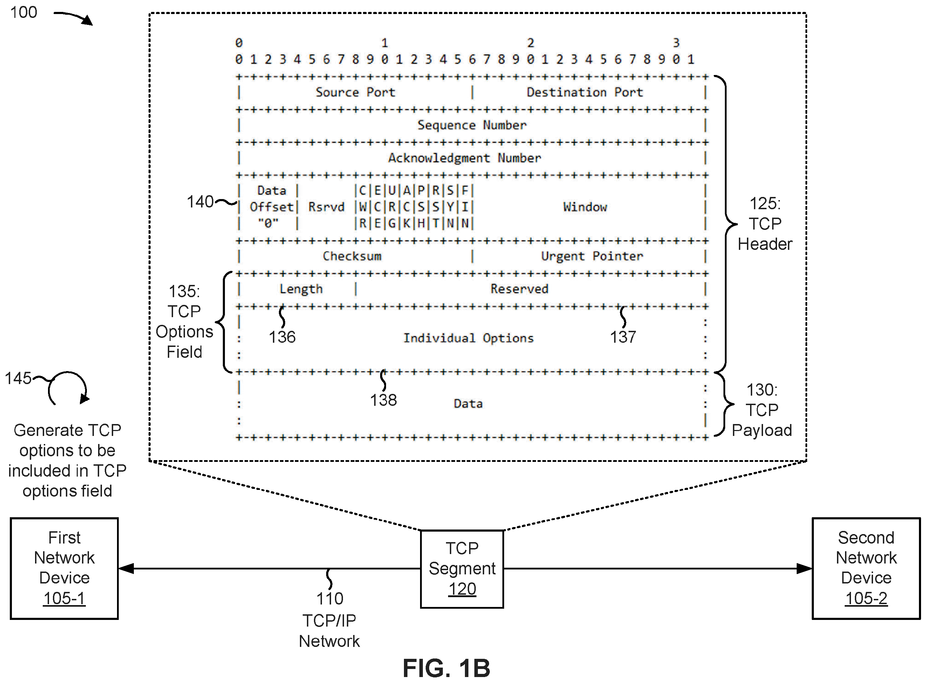

In that regard, in some implementations the length field 136 of the TCP options field 135 may be set to a nominal value greater than 11. This is because a nominal value of 11 would signify a length of the TCP options field 135 of 44 octets (e.g., 11 × 4-octet units = 44 octets), resulting in a length of the individual options field 138 being 40 octets (e.g., 44 octets - 32 bits corresponding to the length field 136 and the reserved field 137). In such implementations, the 40-octet TCP options would fit in the TCP options field defined by IETF RFC 9293, and thus the TCP options field 135 shown in Figs. 1A-1H may not be used. In this regard, the length field 136 of the TCP options field 135 may be set to a nominal value between 12 and 255, and may thus be capable of indicating TCP options field 135 lengths of between 48 octets and 1020 octets. Aspects of setting and interpreting the data offset field 140 to a specific value (e.g., 0) to indicate that the TCP segment 120 includes the extended TCP options field 135 are described in more detail below in connection with Figs. 1B-1H.

More particularly, as shown in Fig. 1B, and as indicated by reference number 145, the first network device 105-1 may generate one or more TCP options to be included in a TCP options field (e.g., one of the TCP options field defined by IETF RFC 9293 or else the extended TCP options field 135 described above) of a TCP header 125 of a TCP segment 120. In some implementations, the one or more TCP options may include a message digest associated with TCP-AO. For example, the first network device 105-1 may encrypt an internal traffic key and the TCP segment 120 to generate a message digest, which is to be included in a TCP-AO option in the TCP segment 120, among other examples.

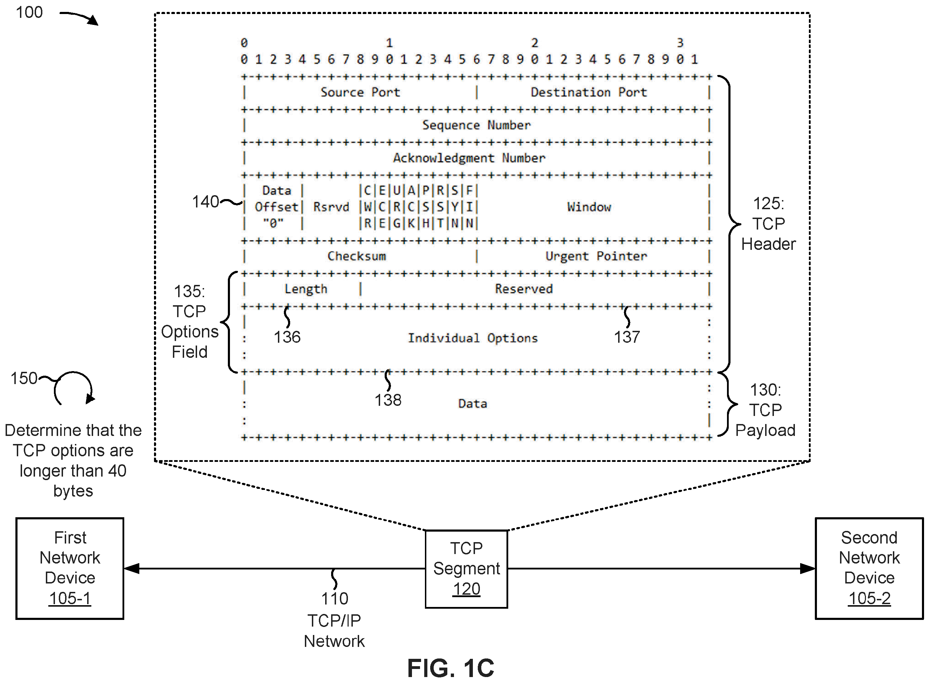

As shown in Fig. 1C, and as indicated by reference number 150, the first network device 105-1 may determine that the one or more TCP options are longer than 40 bytes. More particularly, and as described above, in aspects in which the TCP options are less than 40 bytes, the TCP options field defined by IETF RFC 9293 may be utilized, and thus the data offset field 140 may simply be set to a value of 5 through 15 to indicate a data offset and thus indicate a corresponding length of the TCP options field. However, in implementations in which the TCP options are longer than 40 bytes, the extended TCP options field 135 may be used to accommodate the lengthy options. Accordingly, as shown in Fig. 1C, the first network device 105-1 may be configured to determine whether the TCP options to be sent in a TCP segment 120 exceed 40 bytes, such as for a purpose of selecting which type of TCP options field is to be used (e.g., either the TCP options field defined by IETF RFC 9293 or the extended TCP options field 135).

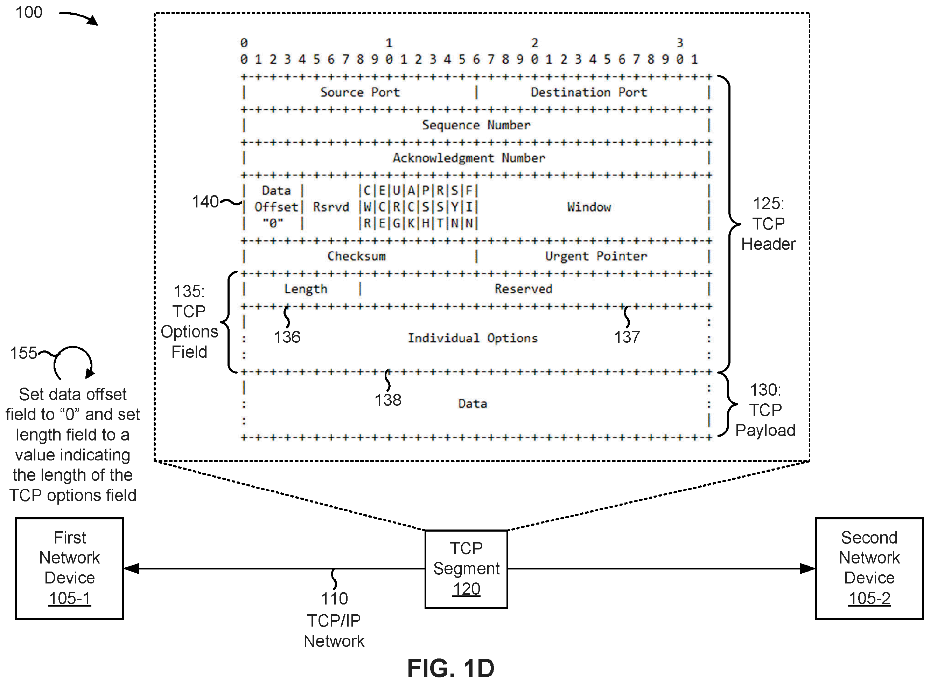

As shown in Fig. 1D, and as indicated by reference number 155, the first network device 105-1 may set the data offset field 140 in the TCP header 125 to a value (e.g., "0") based on determining that the one or more TCP options are longer than 40 bytes. As described above, the specific value (e.g., "0") indicates that a length of the TCP options field 135 is indicated by a length field 136 included in the TCP options field 135 (e.g., as opposed to being indicated by the data offset field 140 as would be the case for a TCP options field defined by IETF RFC 9293). Moreover, the first network device 105-1 may set the length field 136 to a value indicating the length of the TCP options field 135. For example, in a similar manner as described above, the first network device 125-1 may set the length field to a nominal value between 12 and 255 corresponding to TCP options field 135 lengths of 48 octets to 1020 octets, respectively. Additionally, or alternatively, the first network device 105-1 may set one or more additional fields in the TCP segment 120, such as one or more fields in the TCP header 125. For example, the first network device 105-1 may include a checksum (e.g., as defined by IETF RFC 9293) in the checksum field of the TCP header 125 that is calculated over the entire TCP options field 135, among other examples.

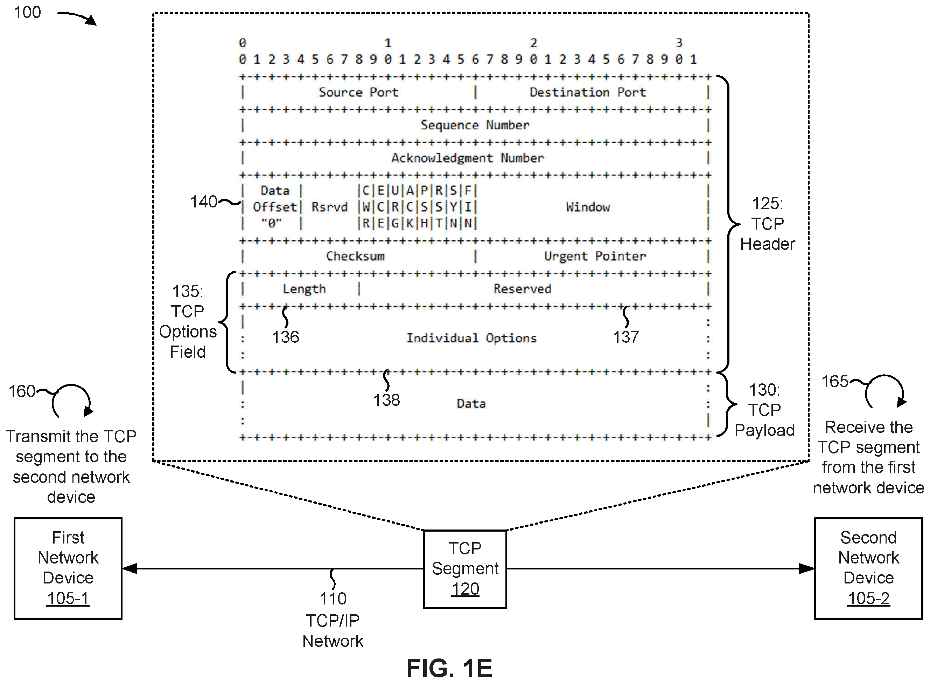

As shown in Fig. 1E, and as indicated by reference number 160, the first network device 105-1 may transmit the TCP segment 120 (which, as described above, includes the TCP options field 135 with the length field 136 and the one or more TCP options included in the individual options field 138 thereof) to the second network device 105-2 (e.g., via the TCP/IP network 110). Accordingly, as further shown in Fig. 1E, and as indicated by reference number 165, the second network device 105-2 may receive the TCP segment 120.

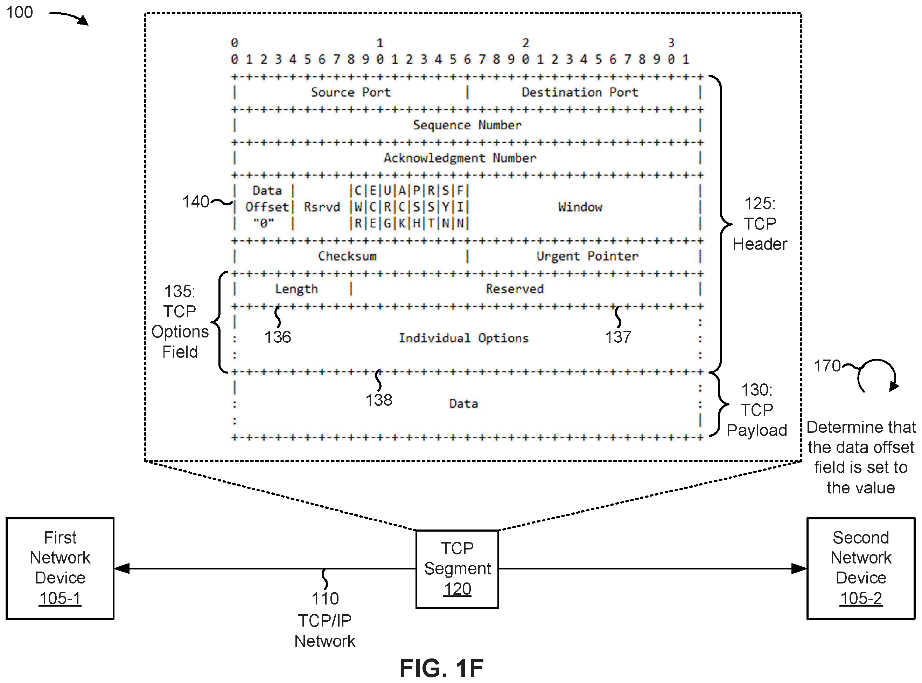

As shown in Fig. 1F, and as indicated by reference number 170, the second network device 105-2 may determine that the data offset field 140 is set to the value that indicates that a length of the TCP options field 135 is provided by the length field 136 included in the TCP options field 135. For example, the second network device 105-2 may determine that the data offset field is set to "0" and thus may determine that the length of the TCP options field 135 is provided by the length field 136 in the TCP options field 135.

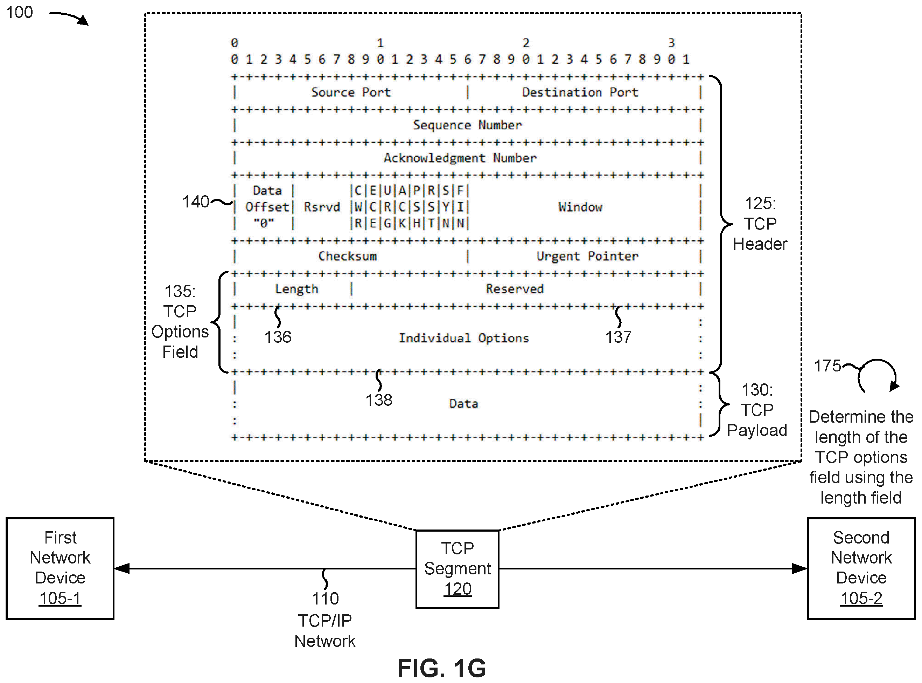

As shown in Fig. 1G, and as indicated by reference number 175, the second network device 105-2 may thus determine the length of the TCP options field 135 using the length field 136 included in the TCP options field 135. For example, the second network device 105-2 may determine that the length of the TCP options field 135 is a quantity of octets equal to the nominal value indicated by the length field 136 multiplied by four (e.g., in aspects in which the length field 136 indicates the length of the TCP options field 135 by indicating a quantity of four-octet units included in the TCP options field 135).

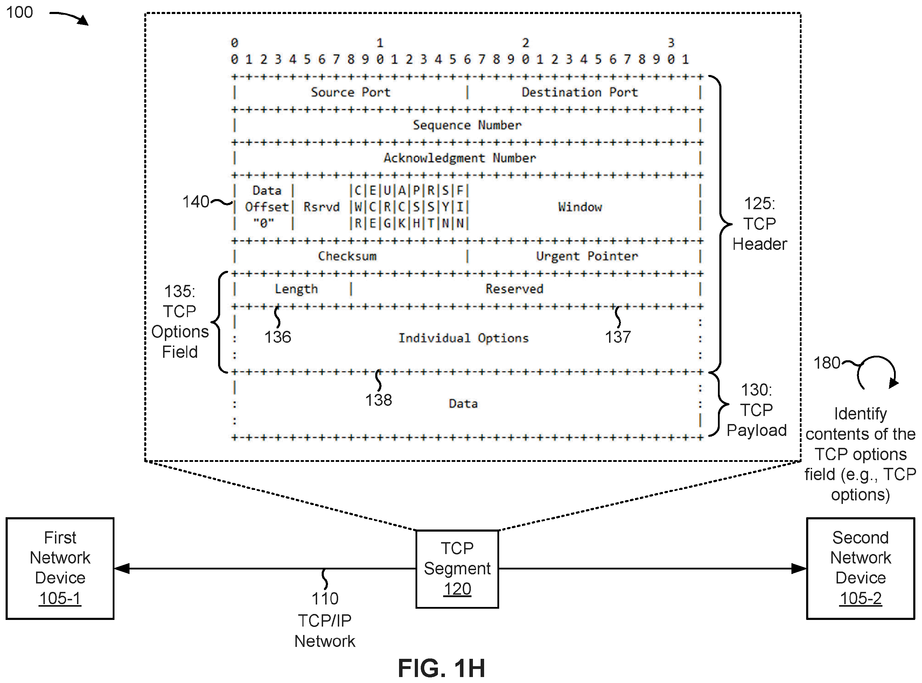

As shown in Fig. 1H, and as indicated by reference number 180, the second network device 105-2 may thus identify contents of the TCP options field 135 based on the length of the TCP options field 135. Put another way, the second network device 105-2 may identify the TCP options of the TCP segment 120 by retrieving the bits included in the quantity of octets indicated by the length field 136 of the TCP options field 135. For example, in implementations involving TCP-AO, the second network device 105-2 may retrieve a message digest from the individual options field 138 based on the determined length of the TCP options field 135, such as by retrieving the message digest (and any other TCP options) from the final N-4 octets of the TCP options field 135, with N corresponding to the total number of octets included in the TCP options field 135.

In some aspects, a TCP segment 120 including the extended TCP options field 135 may be received by a TCP endpoint (e.g., a network device 105) that is not capable of processing TCP segments 120 having a data offset field 140 set to zero. Accordingly, in order to ensure backwards compatibility with such TCP endpoints in the TCP/IP network 110, the TCP segment 120 having the extended TCP options field 135 may be sent in TCP sessions in which a TCP segment 120 having an extended TCP options field 135 (e.g., a TCP segment 120 having a data offset field 140 set to 0) was transmitted during session establishment. In this way, when a TCP endpoint is not capable of processing TCP segments 120 with the data offset field set to 0, and such a TCP segment 120 is sent during connection establishment, the TCP segment 120 will be ignored by that TCP endpoint and the connection will not establish. Similarly, once a TCP session has been established, TCP implementations may refrain from sending TCP segments 120 having a data offset field 140 set to 0 unless such TCP segments 120 (e.g., TCP segments 120 with extended TCP options fields 135) were used during connection establishment.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

Figs. 2A-2B are diagrams of example 200 associated with components used to implement extended TCP options fields. For ease of description, the example 200 is shown and described in connection with a network device 105, but, in some other implementations, other devices described herein may include similar components. For example, in some other implementations, a TCP endpoint or other device associated with the TCP/IP network 110 may include one or more of the components described below. In the example 200, the network device 105 includes processing circuitry 210, a memory 220, a storage 230, and/or a network interface 240. The processing circuitry 210, the memory 220, the storage 230, and/or the network interface 240 may be coupled to one another, such as vis a bus 250. Moreover, and as described in more detail below, the memory 220 and/or the storage 230 may include a computer-readable medium 260 storing code, such as extended TCP option field code 270, among other examples.

The bus 250 includes one or more components that enable wired and/or wireless communication among the components of the network device 105. The bus 250 couples together two or more components, such as via operative coupling, communicative coupling, electronic coupling, and/or electric coupling. For example, the bus 250 may include an electrical connection (e.g., a wire, a trace, and/or a lead) and/or a wireless bus.

The processing circuitry 210 includes a central processing unit (CPU), a graphics processing unit (GPU), a microprocessor, a controller, a microcontroller, a digital signal processor, a field-programmable gate array (FPGA), an application-specific integrated circuit (ASIC), and/or another type of processing component. The processing circuitry 210 may be implemented in hardware, firmware, or a combination of hardware and software. In some implementations, the processing circuitry 210 includes one or more processors capable of being programmed to perform one or more operations or processes described elsewhere herein.

The memory 220 and/or the storage 230 includes volatile and/or nonvolatile memory, such as random access memory (RAM), read only memory (ROM), a hard disk drive, and/or another type of memory (e.g., a flash memory, a magnetic memory, and/or an optical memory). The memory 220 and/or the storage 230 may include internal memory (e.g., RAM, ROM, or a hard disk drive) and/or removable memory (e.g., removable via a universal serial bus connection).

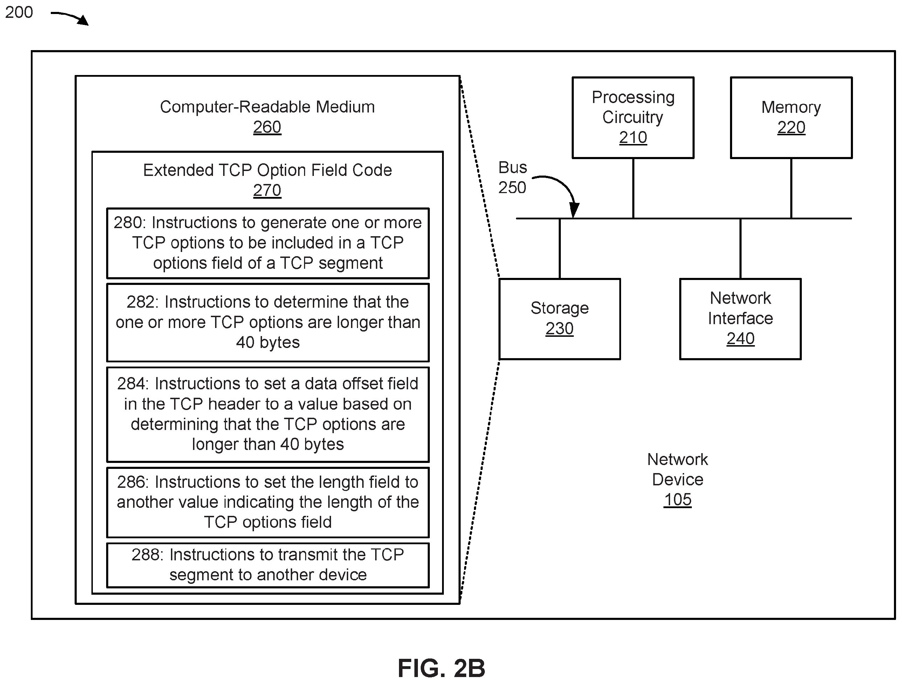

In some implementations, the memory 220 and/or storage 230 is a non-transitory computer-readable medium, such as computer-readable medium 260 shown in connection with the storage 230. The computer-readable medium 260 stores information, one or more instructions, and/or software (e.g., one or more software applications) related to the operation of the network device 105, such as extended TCP option field code 270. The code included in the extended TCP option field code 270 includes at least some of the computer code involved in performing one or more operations described herein. For example, as shown in Fig. 2A, the operations may include receiving a TCP segment including a TCP header having a data offset field and a TCP options field (block 272); determining that the data offset field is set to a value that indicates that a length of the TCP options field is provided by a length field included in the TCP options field (block 274); determining the length of the TCP options field using the length field included in the TCP options field (block 276); and identifying contents of the TCP options field based on the length of the TCP options field (block 278). In some other implementations, as shown in Fig. 2B, the operations may include generating one or more TCP options to be included in a TCP options field of a TCP header of a TCP segment (block 280); determining that the one or more TCP options are longer than 40 bytes (block 282); setting a data offset field in the TCP header to a value based on determining that the one or more TCP options are longer than 40 bytes, wherein the value indicates that a length of the TCP options field is indicated by a length field included in the TCP options field (block 284); setting the length field to another value indicating the length of the TCP options field (block 286); and transmitting the TCP segment to another device (block 288).

In some implementations, the memory 220, the storage 230, and/or the computer-readable medium 260 includes one or more memories that are coupled (e.g., communicatively coupled) to one or more processors (e.g., processing circuitry 210), such as via the bus 250. Communicative coupling between processing circuitry 210 and the memory 220, the storage 230, and/or the computer-readable medium 260 enables the processing circuitry 210 to read and/or process information stored in the memory 220, the storage 230, and/or the computer-readable medium 260 and/or to store information in the memory 220, the storage 230, and/or the computer-readable medium 260.

The network interface 240 enables the network device 105 to communicate with one or more other devices via a network, such as the TCP/IP network 110, among other examples. In some implementations, the network interface 240 enables the network device 105 to communicate with another network device 105 using TCP segments (e.g., TCP segment 120), in a similar manner as described above in connection with Figs. 1A-1H. In some implementations, the network interface 240 enables the network device 105 to communicate with other devices via a wired connection and/or a wireless connection. For example, the network interface 240 may include a receiver, a transmitter, a transceiver, a modem, a network interface card, and/or an antenna.

In some implementations, the network device 105 performs one or more operations or processes described herein. For example, a non-transitory computer-readable medium (e.g., computer-readable medium 260, which may correspond to memory 220 and/or storage 230) may store a set of instructions (e.g., one or more instructions or code, such as extended TCP options field code 270) for execution by the processing circuitry 210. Additionally or alternatively the set of instructions may be provided to the memory 220, storage 230 and/or processing circuitry 210 by way of a computer-readable transmission medium (e.g. carrier waves, transmission signals or the like). A computer-readable transmission medium may convey instructions between components of a single computer system and/or between plural separate computer systems. The processing circuitry 210 may execute the set of instructions to perform one or more operations or processes described herein. In some implementations, execution of the set of instructions, by the processing circuitry 210, causes the processing circuitry 210 and/or the network device 105 to perform one or more operations or processes described herein. In some implementations, hardwired circuitry is used instead of or in combination with the instructions to perform one or more operations or processes described herein. Additionally, or alternatively, the processing circuitry 210 may be configured to perform one or more operations or processes described herein. Thus, implementations described herein are not limited to any specific combination of hardware circuitry and software.

The number and arrangement of components shown in Figs. 2A-2B are provided as an example. The network device 105 may include additional components, fewer components, different components, or differently arranged components than those shown in Figs. 2A-2B. Additionally, or alternatively, a set of components (e.g., one or more components) of the network device 105 may perform one or more functions described as being performed by another set of components of the network device 105.

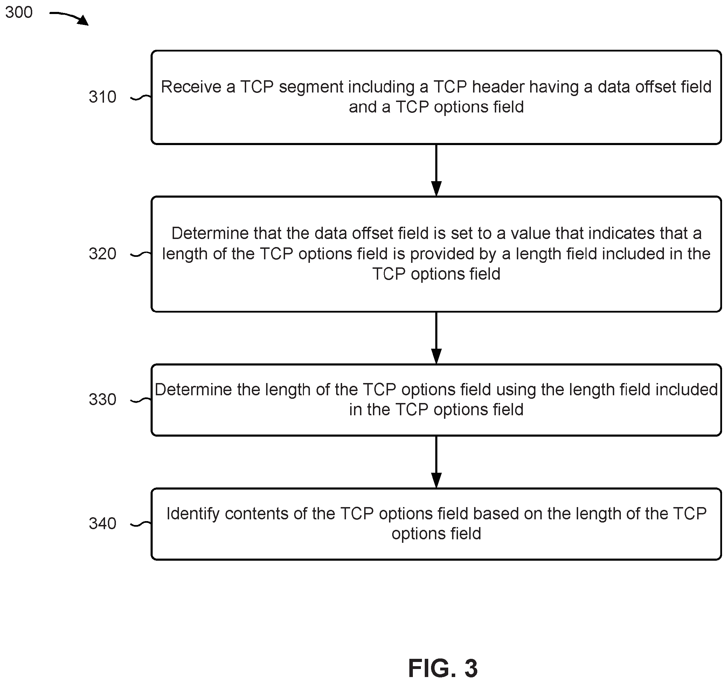

Fig. 3 is a flowchart of an example process 300 associated with extended TCP options fields. One or more process blocks of Fig. 3 are performed by a network device (e.g., network device 105) and/or by another device or a group of devices separate from or including the network device, such as a TCP endpoint or similar device. Additionally, or alternatively, one or more process blocks of Fig. 3 may be performed by one or more components of the network device 105, such as processing circuitry 210, memory 220, storage 230, network interface 240, and/or computer-readable medium 260.

As shown in Fig. 3, process 300 includes receiving a TCP segment including a TCP header having a data offset field and a TCP options field (block 310). For example, the network device 105 may receive a TCP segment 120 including a TCP header 125 having a data offset field 140 and a TCP options field 135, as described above.

As further shown in Fig. 3, process 300 includes determining that the data offset field is set to a value that indicates that a length of the TCP options field is provided by a length field included in the TCP options field (block 320). For example, the network device 105 may determine that the data offset field 140 is set to a value that indicates that a length of the TCP options field 135 is provided by a length field 136 included in the TCP options field 135, as described above.

As further shown in Fig. 3, process 300 includes determining the length of the TCP options field using the length field included in the TCP options field (block 330). For example, the network device 105 may determine the length of the TCP options field 135 using the length field 136 included in the TCP options field 135, as described above.

As further shown in Fig. 3, process 300 includes identifying contents of the TCP options field based on the length of the TCP options field (block 340). For example, the network device 105 may identify contents of the TCP options field 135 based on the length of the TCP options field 135, as described above.

Process 300 may include additional aspects, such as any single aspect or any combination of aspects described below and/or in connection with one or more other processes described elsewhere herein.

In a first aspect, the value is 0.

In a second aspect, alone or in combination with the first aspect, the TCP options field includes the length field, a reserved field, and an individual options field based on the data offset field being set to the value.

In a third aspect, alone or in combination with one or more of the first and second aspects, the length field is an eight-bit field.

In a fourth aspect, alone or in combination with one or more of the first through third aspects, the length field indicates the length of the TCP options field by indicating a quantity of four-octet units included in the TCP options field.

In a fifth aspect, alone or in combination with one or more of the first through fourth aspects, the quantity of four-octet units included in the TCP options field is greater than eleven.

In a sixth aspect, alone or in combination with one or more of the first through fifth aspects, the data offset field is set to the value based on the length of the TCP options field being greater than 40 octets.

In a seventh aspect, alone or in combination with one or more of the first through sixth aspects, the contents of the TCP options field include a message digest associated with a TCP authentication option.

Although Fig. 3 shows example blocks of process 300, in some implementations, process 300 includes additional blocks, fewer blocks, different blocks, or differently arranged blocks than those depicted in Fig. 3. Additionally, or alternatively, two or more of the blocks of process 300 may be performed in parallel.

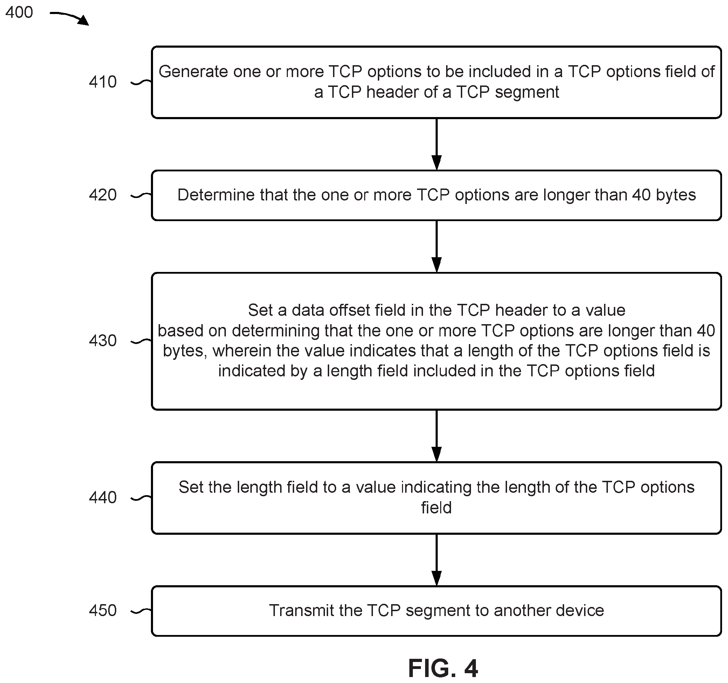

Fig. 4 is a flowchart of an example process 400 associated with extended TCP options fields. One or more process blocks of Fig. 4 are performed by a network device (e.g., network device 105) and/or by another device or a group of devices separate from or including the network device, such as a TCP endpoint or similar device. Additionally, or alternatively, one or more process blocks of Fig. 4 may be performed by one or more components of the network device 105, such as processing circuitry 210, memory 220, storage 230, network interface 240, and/or computer-readable medium 260.

As shown in Fig. 4, process 400 includes generating one or more TCP options to be included in a TCP options field of a TCP header of a TCP segment (block 410). For example, the network device 105 may generate one or more TCP options to be included in a TCP options field 135 of a TCP header 125 of a TCP segment 120, as described above.

As further shown in Fig. 4, process 400 includes determining that the one or more TCP options are longer than 40 bytes (block 420). For example, the network device 105 may determine that the one or more TCP options are longer than 40 bytes, as described above.

As further shown in Fig. 4, process 400 includes setting a data offset field in the TCP header to a value based on determining that the one or more TCP options are longer than 40 bytes, wherein the value indicates that a length of the TCP options field is indicated by a length field included in the TCP options field (block 430). For example, the network device 105 may set a data offset field 140 in the TCP header 125 to a value based on determining that the one or more TCP options are longer than 40 bytes, wherein the value indicates that a length of the TCP options field 135 is indicated by a length field 136 included in the TCP options field 135, as described above.

As further shown in Fig. 4, process 400 includes setting the length field to another value indicating the length of the TCP options field (block 440). For example, the network device 105 may set the length field 136 to another value indicating the length of the TCP options field 135, as described above.

As further shown in Fig. 4, process 400 includes transmitting the TCP segment to another device (block 450). For example, the network device 105 may transmit the TCP segment 120 to another device, as described above.

Process 400 may include additional aspects, such as any single aspect or any combination of aspects described below and/or in connection with one or more other processes described elsewhere herein.

In a first aspect, the value is 0.

In a second aspect, alone or in combination with the first aspect, the TCP options field includes the length field, a reserved field, and an individual options field containing the one or more TCP options based on the data offset field being set to the value.

In a third aspect, alone or in combination with one or more of the first and second aspects, the length field is an eight-bit field.

In a fourth aspect, alone or in combination with one or more of the first through third aspects, the length field indicates the length of the TCP options field by indicating a quantity of four-octet units included in the TCP options field.

In a fifth aspect, alone or in combination with one or more of the first through fourth aspects, the quantity of four-octet units included in the TCP options field is greater than eleven.

In a sixth aspect, alone or in combination with one or more of the first through fifth aspects, the one or more TCP options include a message digest associated with a TCP authentication option.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

Therefore, from one perspective, there have been described approaches which may include a first network device receiving a transmission control protocol (TCP) segment including a TCP header having a data offset field and a TCP options field. The first network device may determine that the data offset field is set to a value that indicates that a length of the TCP options field is provided by a length field included in the TCP options field. The first network device may determine the length of the TCP options field using the length field included in the TCP options field. The first network device may identify contents of the TCP options field based on the length of the TCP options field.

Further examples of feature combinations taught by the present disclosure are set out in the following numbered clauses.

Clause 1. A method, comprising: receiving, by a first network device from a second network device, a transmission control protocol (TCP) segment including a TCP header having a data offset field and a TCP options field; determining, by the first network device, that the data offset field is set to a value that indicates that a length of the TCP options field is provided by a length field included in the TCP options field; determining, by the first network device, the length of the TCP options field using the length field included in the TCP options field; and identifying, by the first network device, contents of the TCP options field based on the length of the TCP options field.

Clause 2. The method of clause 1, wherein the value is 0.

Clause 3. The method of clause 1 or 2, wherein the TCP options field includes the length field, a reserved field, and an individual options field based on the data offset field being set to the value.

Clause 4. The method of clause 1, 2 or 3, wherein the length field is an eight-bit field.

Clause 5. The method of any preceding clause, wherein the length field indicates the length of the TCP options field by indicating a quantity of four-octet units included in the TCP options field.

Clause 6. The method of clause 5, wherein the quantity of four-octet units included in the TCP options field is greater than eleven.

Clause 7. The method of any preceding clause, wherein the data offset field is set to the value based on the length of the TCP options field being greater than 40 octets.

Clause 8. The method of any preceding clause, wherein the contents of the TCP options field include a message digest associated with a TCP authentication option.

Clause 9. A device, comprising: one or more memories; and one or more processors to: generate one or more transmission control protocol (TCP) options to be included in a TCP options field of a TCP header of a TCP segment; determine that the one or more TCP options are longer than 40 bytes; set a data offset field in the TCP header to a value based on determining that the one or more TCP options are longer than 40 bytes, wherein the value indicates that a length of the TCP options field is indicated by a length field included in the TCP options field; set the length field to another value indicating the length of the TCP options field; and transmit the TCP segment to another device.

Clause 10. The device of clause 9, wherein the value is 0.

Clause 11. The device of clause 9 or 10, wherein the TCP options field includes the length field, a reserved field, and an individual options field containing the one or more TCP options based on the data offset field being set to the value.

Clause 12. The device of clause 9, 10 or 11, wherein the length field is an eight-bit field.

Clause 13. The device of any of clauses 9 to 12, wherein the length field indicates the length of the TCP options field by indicating a quantity of four-octet units included in the TCP options field.

Clause 14. The device of clause 13, wherein the quantity of four-octet units included in the TCP options field is greater than eleven.

Clause 15. The device of any of clauses 9 to 14, wherein the one or more TCP options include a message digest associated with a TCP authentication option.

Clause 16. A computer-readable medium comprising a set of instructions, the set of instructions comprising: one or more instructions that, when executed by one or more processors of a device, cause the device to: transmit, to another device, a first transmission control protocol (TCP) segment, wherein the first TCP segment includes a first TCP header including a first TCP options field and a first data offset field, and wherein the first data offset field is set to a value to indicate that a first length of the first TCP options field is indicated by a first length field included in the first TCP options field; and receive, from the other device, a second TCP segment in response to transmission of the first TCP segment, wherein the second TCP segment includes a second TCP header including a second TCP options field and a second data offset field, and wherein the second data offset field is set to the value to indicate that a second length of the second TCP options field is indicated by a second length field included in the second TCP options field.

Clause 17. The computer-readable medium of clause 16, wherein the value is 0.

Clause 18. The computer-readable medium of clause 16 or 17, wherein the first TCP options field includes the first length field, a first reserved field, and a first individual options field based on the first data offset field being set to the value, and wherein the second TCP options field includes the second length field, a second reserved field, and a second individual options field based on the second data offset field being set to the value.

Clause 19. The computer-readable medium of clause 16, 17 or 18, wherein the first length field and the second length field are eight-bit fields.

Clause 20. The computer-readable medium of any of clauses 16 to 19, wherein the first length field indicates the first length of the first TCP options field by indicating a first quantity of four-octet units included in the first TCP options field, and wherein the second length field indicates the second length of the second TCP options field by indicating a second quantity of four-octet units included in the second TCP options field.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. "Packet" may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
receiving, by a first network device from a second network device, a transmission control protocol (TCP) segment including a TCP header having a data offset field and a TCP options field;
determining, by the first network device, that the data offset field is set to a value that indicates that a length of the TCP options field is provided by a length field included in the TCP options field;
determining, by the first network device, the length of the TCP options field using the length field included in the TCP options field; and
identifying, by the first network device, contents of the TCP options field based on the length of the TCP options field.

2. The method of claim 1, wherein the value is 0.

3. The method of claim 1 or 2, wherein the TCP options field includes the length field, a reserved field, and an individual options field based on the data offset field being set to the value.

4. The method of claim 1, 2 or 3, wherein the length field is an eight-bit field.

5. The method of any preceding claim, wherein the length field indicates the length of the TCP options field by indicating a quantity of four-octet units included in the TCP options field, for example wherein the quantity of four-octet units included in the TCP options field is greater than eleven.

6. The method of any preceding claim, wherein the data offset field is set to the value based on the length of the TCP options field being greater than 40 octets.

7. The method of any preceding claim, wherein the contents of the TCP options field include a message digest associated with a TCP authentication option.

8. A device, comprising:
one or more memories; and
one or more processors to:
generate one or more transmission control protocol (TCP) options to be included in a TCP options field of a TCP header of a TCP segment;
determine that the one or more TCP options are longer than 40 bytes;
set a data offset field in the TCP header to a value based on determining that the one or more TCP options are longer than 40 bytes, wherein the value indicates that a length of the TCP options field is indicated by a length field included in the TCP options field;
set the length field to another value indicating the length of the TCP options field; and
transmit the TCP segment to another device.

9. The device of claim 8, wherein the value is 0.

10. The device of claim 8 or 9, wherein the TCP options field includes the length field, a reserved field, and an individual options field containing the one or more TCP options based on the data offset field being set to the value.

11. The device of claim 8, 9 or 10, wherein the length field is an eight-bit field and/or indicates the length of the TCP options field by indicating a quantity of four-octet units included in the TCP options field, for example wherein the quantity of four-octet units included in the TCP options field is greater than eleven.

12. The device of any of claims 8 to 11, wherein the one or more TCP options include a message digest associated with a TCP authentication option.

13. A computer-readable medium comprising a set of instructions that, when executed by one or more processors of a device, cause the device to
transmit, to another device, a first transmission control protocol (TCP) segment,
wherein the first TCP segment includes a first TCP header including a first TCP options field and a first data offset field, and
wherein the first data offset field is set to a value to indicate that a first length of the first TCP options field is indicated by a first length field included in the first TCP options field; and
receive, from the other device, a second TCP segment in response to transmission of the first TCP segment,
wherein the second TCP segment includes a second TCP header including a second TCP options field and a second data offset field, and
wherein the second data offset field is set to the value to indicate that a second length of the second TCP options field is indicated by a second length field included in the second TCP options field.

14. The computer-readable medium of claim 13, wherein the first TCP options field includes the first length field, a first reserved field, and a first individual options field based on the first data offset field being set to the value, and
wherein the second TCP options field includes the second length field, a second reserved field, and a second individual options field based on the second data offset field being set to the value.

15. The computer-readable medium of claim 13 or 14, wherein the first length field and the second length field are eight-bit fields, for example wherein the first length field indicates the first length of the first TCP options field by indicating a first quantity of four-octet units included in the first TCP options field, and wherein the second length field indicates the second length of the second TCP options field by indicating a second quantity of four-octet units included in the second TCP options field.
